# EUROPÄISCHE PATENTSCHRIFT

(11) **EP 2 859 291 B1**
(45) Veröffentlichungstag und Bekanntmachung des Hinweises auf die Patenterteilung: **14.09.2016**
(21) Anmeldenummer: 13727533.5
(22) Anmeldetag: 16.05.2013
(51) Int. Cl.: F26B 11/04, F26B 21/08, F26B 23/00

(54) **VERFAHREN UND MASCHINE ZUM TROCKNEN VON STOFFEN**
METHOD AND MACHINE FOR DRYING MATERIALS
PROCÉDÉ ET MACHINE POUR SÉCHER DES MATIÈRES

(30) Priorität: 11.06.2012 DE 102012011384
(43) Veröffentlichungstag der Anmeldung: 15.04.2015
(73) Patentinhaber: Deantec GmbH, 57399 Kirchhundem (DE)
(72) Erfinder: DENKE, Falk, 57399 Kirchhundem (DE)
(74) Vertreter: Beckmann, Jürgen
(86) Internationale Anmeldenummer: PCT/EP2013/060204
(87) Internationale Veröffentlichungsnummer: WO 2013/186011

(56) Entgegenhaltungen:
- EP-A1- 0 798 525
- WO-A1-02/088453
- CH-A5- 585 378
- GB-A- 2 083 190

## Beschreibung

Die Erfindung betrifft eine Trocknungsmaschine sowie ein Verfahren zum Trocknen von Stoffen, beispielsweise von Gießereisanden, Wäsche, Zellstoffen und/oder Schüttgütern. Ferner betrifft sie eine Maschine und ein Verfahren zum Waschen bzw. zur Regenerierung von Stoffen.

In bekannten Wäschetrocknern befindet sich die zu trocknende Wäsche in einer horizontal umlaufenden Trommel. Dadurch wird sie dauernd umgewälzt, und es wird eine große wirksame Oberfläche der Wäsche erzielt. Erwärmte Luft strömt längs der Trommeldrehachse durch die feuchte Wäsche in Richtung Tür. Dabei ist die trockene, warme Luft in der Lage, die Feuchtigkeit der Wäsche bis zur Sättigungsgrenze aufzunehmen. Nachdem die feuchte Luft ein Flusensieb passiert hat, wird sie typischerweise ins Freie geblasen.

Ferner ist aus der WO 02/088453 A1 ein Geschirrspüler bekannt, bei welchem aus einer inneren Trocknungskammer Dampf entzogen und in einer äußeren Kammer kondensiert wird, so dass latente Wärme in die innere Trocknungskammer zurückgelangen kann.

Vor diesem Hintergrund war es Aufgabe der vorliegenden Erfindung, Mittel zum kostengünstigen Trocknen von Stoffen bereitzustellen.

Diese Aufgabe wird durch eine Trocknungsmaschine nach Anspruch 1, durch ein Verfahren nach Anspruch 2, sowie durch eine Waschanlage nach Anspruch 6 gelöst. Vorteilhafte Ausgestaltungen sind in den Unteransprüchen enthalten.

Gemäß einem ersten Aspekt betrifft die Erfindung eine Trocknungsmaschine zum Trocknen von Stoffen wie beispielsweise Gießereisanden, Wäsche, Zellstoffen und/oder Schüttgütern. Der Begriff "Stoffe" soll demnach sowohl Reinstoffe als auch Stoffgemische umfassen. Bei den Gießereisanden kann es sich generell insbesondere um anorganisch gebundene Gießereisande handeln. Die Trocknungsmaschine enthält die folgenden Komponenten:
- Einen Trocknungsbehälter zur Aufnahme der zu trocknenden Stoffe.
- Eine mit dem Trocknungsbehälter verbundene Kondensationskammer, in welcher Dampf aus dem Trocknungsbehälter in thermischem Kontakt zu Material, das sich im Trocknungsbehälter befindet, kondensiert werden kann, wobei der Trocknungsbehälter einen drehbar gelagerten Trommeltrockner enthält, und wobei die Kondensationskammer fest mit dem Trommeltrockner verbunden ist.

Bei dem genannten Dampf handelt es sich typischerweise um solchen, welcher durch Verdampfen von Flüssigkeit aus dem Material im Trocknungsbehälter erzeugt wurde. Des Weiteren ist der Begriff "Dampf" allgemein zu verstehen als eine homogene (gasförmige) oder heterogene (tröpfchenförmige) Verteilung von Flüssigkeitsteilchen in einem Trägergas (z.B. Luft). Ein typisches Beispiel ist Wasserdampf, welcher durch Verdampfen von Wasser aus den zu trocknenden Stoffen entstanden ist.
Gemäß einem zweiten Aspekt betrifft die Erfindung ein Verfahren zum Trocknen von Stoffen wie beispielsweise Gießereisanden, Wäsche, Zellstoffen und/oder Schüttgütern, welches die folgenden Schritte enthält:
- Verdampfen von Flüssigkeit aus den zu trocknenden Stoffen.
- Kondensieren der verdampften Flüssigkeit (d. h. des im ersten Schritt erzeugten Dampfes) in thermischem Kontakt zum Material, aus dem die Flüssigkeit verdampft wurde.

Das Verfahren wird in einer Trocknungsmaschine der oben beschriebenen Art durchgeführt werden. Erläuterungen und Definitionen für die Trocknungsmaschine sind daher analog auch für das Verfahren gültig und umgekehrt.

Die Trocknungsmaschine und das Verfahren haben den Vorteil, dass die zum Verdampfen von Flüssigkeit eingesetzte Energie durch die Kondensation des entstehenden Dampfes zurückgewonnen wird und durch den thermischen Kontakt zum zu trocknenden Material für weitere Verdampfungsvorgänge genutzt werden kann. Auf diese Weise kann eine besonders effiziente, Energie sparende und kostengünstige Trocknung der Stoffe erreicht werden.

Im Folgenden werden verschiedene Weiterbildungen beschrieben, die sich sowohl für die Trocknungsmaschine als auch für das Verfahren anwenden lassen.

Im Prinzip könnten der Trocknungsbehälter und die Kondensationskammer ganz oder teilweise überlappend bzw. identisch sein, d. h. Trocknung und Kondensation können im selben Behälter/Raum stattfinden. Vorzugsweise ist indes der Trocknungsbehälter, in welchem das Verdampfen von Flüssigkeit aus den zu trocknenden Stoffen erfolgt, baulich von der Kondensationskammer getrennt. Auf diese Weise kann verhindert werden, dass kondensierter Dampf sich wieder in den zu trocknenden Stoffen niederschlägt und das Ergebnis der Trocknung somit zunichte macht.

Besonders bevorzugt ist es, wenn der Trocknungsbehälter und die Kondensationskammer durch eine gemeinsame Wand getrennt sind, da dann die in der Kondensationskammer anfallende Kondensationswärme auf kurzem Wege durch Wärmeleitung in den Trocknungsbehälter (zurück) gelangen kann. Insbesondere kann die genannte Wand mit einer hohen Wärmeleitfähigkeit ausgebildet sein, zum Beispiel indem sie aus Metall besteht.

Die Kondensationskammer kann vorteilhafterweise den Trocknungsbehälter (ganz oder teilweise) umgeben. Beispielsweise kann der Trocknungsbehälter zylinderförmig sein und die Kondensationskammer den Zylinder entlang seines Mantels umgeben. Alternativ ist auch eine umgekehrte Anordnung denkbar, bei welcher der Trocknungsbehälter die Kondensationskammer umgibt, sodass sämtliche in der Kondensationskammer anfallende Wärme zwangsläufig durch den Trocknungsbehälter wandern muss, ehe sie in die Umgebung gelangen kann.

Der Trocknungsbehälter enthält bzw. besteht aus einem drehbar gelagerten Trommeltrockner (auch "Trockentrommel" genannt).

Durch die Drehbarkeit einer solchen Trommel kann eine ständige Durchmischung der zu trocknenden Stoffe erreicht werden, was einen effizienten Entzug von Flüssigkeit bewirkt.

Gemäß der Erfindung ist die Kondensationskammer ebenfalls drehbar indem sie fest mit dem Trommeltrockner verbunden ist.

Der Trocknungsbehälter und/oder die Kondensationskammer sind vorzugsweise so ausgestaltet, dass sie druckdicht verschließbar sind. Beispielsweise kann der Trocknungsbehälter eine Tür oder Klappe aufweisen, welche sich druckdicht verriegeln lässt. Innerhalb des Trocknungsbehälters bzw. der Kondensationskammer können dann vom Umgebungsdruck unabhängige Drücke eingestellt werden, um die ablaufenden Prozesse zu unterstützen.

So ist es beispielsweise vorteilhaft, wenn der Druck in der Kondensationskammer höher eingestellt wird als der Druck im Trocknungsbehälter. Die verdampfte Flüssigkeit kondensiert dann in der Kondensationskammer bei einer höheren Temperatur als derjenigen, bei der sie im Trocknungsbehälter verdampft. Auf diese Weise kann ein Wärmefluss von der Kondensationskammer zum Trocknungsbehälter erzeugt werden.

Bei einer vorteilhaften Ausführungsform der Erfindung kann ein Verdichter zur Erhöhung des Druckes in der Kondensationskammer und/oder zur Verringerung des Druckes im Trocknungsbehälter vorhanden sein. Damit lässt sich beispielsweise das vorstehend beschriebene Druckgefälle zwischen Kondensationskammer und Trocknungsbehälter erzeugen. Der Verdichter kann stationär angeordnet sein. Falls die Trocknungsmaschine drehbare Teile wie beispielsweise einen Trommeltrockner enthält, kann der Verdichter auch mit diesen verbunden, also seinerseits drehbar sein. Des Weiteren können Teile des Verdichtungssystems wie etwa eine Pumpe stationär gelagert und über Drehanschlüsse mit beweglichen Teilen der Trocknungsmaschine verbunden sein.

Gemäß einem weiteren Aspekt betrifft die Erfindung eine Waschanlage, insbesondere eine Waschanlage für Stoffe wie beispielsweise Gießereisande, Wäsche, Zellstoffe und/oder Schüttgüter, welche die folgenden Komponenten enthält:
- Eine Waschkammer, in welcher die zu reinigenden Stoffe mit einer Waschflüssigkeit gemischt werden können.
- Einer Trocknungsmaschine der oben beschriebenen Art, in welcher Reste der Waschflüssigkeit von Stoffen aus der Waschkammer verdampft werden können. Das heißt, dass die in der Waschkammer mit Waschflüssigkeit versetzten Stoffe in den Trocknungsbehälter der Trocknungsmaschine gebracht werden (falls sie dort nicht bereits sind), wo die Waschflüssigkeit verdampft und in die Kondensationskammer überführt wird, in welcher sie in thermischem Kontakt zum Material aus dem Trocknungsbehälter kondensiert.

Zur Durchführung des Waschvorganges ist die Waschkammer typischerweise mit Zu- und/oder Ableitungen von Waschflüssigkeit (z.B. Wasser) versehen.

Die Waschkammer der Waschanlage kann eine von der Trocknungsmaschine separate Komponente sein. Sie kann jedoch auch in die Trocknungsmaschine integriert sein, beispielsweise indem Waschkammer und Trocknungsbehälter überlappen bzw. (ganz oder teilweise) identisch sind. Im Trocknungsbehälter kann dann zunächst ein Waschvorgang stattfinden (d.h. er dient als Waschkammer), anschließend die Trocknung der gewaschenen Stoffe.

Die Waschkammer kann optional einen drehbar gelagerten Teil haben, dessen Innenraum (fluidleitend) mit dem Innenraum eines stationären Teils verbunden ist. Beispielsweise kann die Waschkammer eine drehbare Trommel enthalten, welche über mindestens ein Loch mit einem Außenraum in einem stationären Gehäuse verbunden ist. Über den Außenraum kann dann beispielsweise zu Zufuhr bzw. Ableitung von Waschflüssigkeit erfolgen. Die Kondensationskammer kann bei dieser Ausführungsform beispielsweise zusammen mit dem inneren Teil / mit der Trommel ausgebildet sein, oder sie kann zusammen mit dem äußeren Teil stationär sein.

Gemäß einem weiteren Aspekt betrifft die Erfindung eine Regenerierungsanlage für Stoffe wie beispielsweise anorganisch gebundene Gießereisande, welche insbesondere in der vorstehend beschriebenen Art ausgestaltet werden kann und welche folgende Komponenten enthält:
- Eine Waschtrommel, in welcher das Stoffgemisch mit einer Waschflüssigkeit, vorzugsweise mit Wasser, gemischt werden kann. Durch dieses Mischen lösen sich bestimmte Bestandteile des Stoffgemisches, so dass sie zusammen mit der Waschflüssigkeit vom Rest (= gewaschenes Material) abgetrennt werden können.
- Einen Trommeltrockner, dessen Einlass für zu trocknendes Material mit dem Auslass der Waschtrommel verbunden ist, so dass er mit dem in der Waschtrommel gewaschenen Material gefüllt werden kann. Weiterhin werden in dem Trommeltrockner die Teile der Waschflüssigkeit, welche dem eingebrachten Material noch anhaften, verdampft.

Die Waschtrommel stellt eine spezielle Form einer Waschkammer der oben beschriebenen Art dar, während der Trommeltrockner eine spezielle Form eines Trocknungsbehälters ist.

Weiterhin betrifft die Erfindung ein Verfahren zur Regenerierung von Stoffgemischen wie beispielsweise anorganisch gebundenen Gießereisanden, welches insbesondere mit der vorgenannten Regenerierungsanlage durchgeführt werden kann. Das Verfahren umfasst die Schritte:
- Mischen des Stoffgemisches mit einer Waschflüssigkeit wie beispielsweise Wasser, wobei das Mischen vorzugsweise in einer Waschtrommel erfolgt.
- Ableiten von Waschflüssigkeit (aus der Waschtrommel) mit darin gelösten Bestandteilen des Stoffgemisches.
- Verdampfen von Resten der Waschflüssigkeit, wobei das Verdampfen vorzugsweise in einem Trommeltrockner erfolgt.

Im Folgenden werden Weiterbildungen der Waschanlage, der Regenerierungsanlage, und des Verfahrens beschrieben, welche jeweils allein oder in Kombinationen miteinander realisiert werden können.

So wird die Waschtrommel bzw. Waschkammer vorzugsweise gemeinsam mit dem Trommeltrockner bzw. dem Trocknungsbehälter gedreht. Dadurch ist nur ein Antrieb (Motor) erforderlich. Die Rotationsgeschwindigkeit beider Trommeln kann gleich oder verschieden sein, wobei im letztgenannten Fall beispielsweise ein Getriebe zur Kopplung der Trommeln eingesetzt werden kann. Ansonsten können die Trommeln fest verbunden sein.

Verdampfte Waschflüssigkeit wird vorteilhafterweise kondensiert, während sie in thermischem Kontakt zum Material steht, aus welchem Waschflüssigkeit verdampft wird. Stofflich sind das Kondensat und das genannte Material dabei in der Regel voneinander getrennt, damit nicht eine erneute Durchmischung stattfindet. Durch den thermischen Kontakt kann jedoch die Kondensationsenergie zurück in das genannte Material fließen (Wärmerückgewinnung). Die Kondensation kann insbesondere an der Außenhülle des Trommeltrockners stattfinden.

Der Druck der verdampften Waschflüssigkeit wird vorzugsweise vor bzw. bei deren Kondensierung erhöht. Insbesondere kann er auf einen Wert erhöht werden, der größer als der Druck im Trommeltrockner ist. So kann erreicht werden, dass die Temperatur des Kondensats höher als die Verdampfungstemperatur ist, wodurch der Wärmetransport in die gewünschte Richtung erfolgt.

Bei allen oben beschriebenen Maschinen, Anlagen und Verfahren können die zu trocknenden bzw. zu reinigenden Stoffe chargenweise zugeführt und verarbeitet werden. Zusätzlich oder alternativ ist es jedoch auch möglich, die Stoffe kontinuierlich zuzuführen und zu verarbeiten.

Im Folgenden wird die Erfindung mit Hilfe der Figuren beispielhaft näher erläutert. Dabei zeigt:
- Fig. 1: die Rückseite einer Trocknungsmaschine gemäß einer ersten Ausführungsform der Erfindung;
- Fig. 2: die Vorderseite der Trocknungsmaschine von Figur 1;
- Fig. 3: einen vertikalen Schnitt durch die Trocknungsmaschine von Figur 1;
- Fig. 4: einen vertikalen Schnitt durch eine Regenerierungsanlage gemäß einer anderen Ausführungsform der Erfindung;
- Fig. 5: eine Seitenansicht der Regenerierungsanlage von Figur 4;
- Fig. 6: eine als Waschtrockner ausgebildete Abwandlung der Trocknungsmaschine der Figuren 1-3.

Ähnliche oder identische Bauteile tragen in den Figuren in der Regel Bezugszeichen, die sich um Vielfache von 100 unterscheiden.

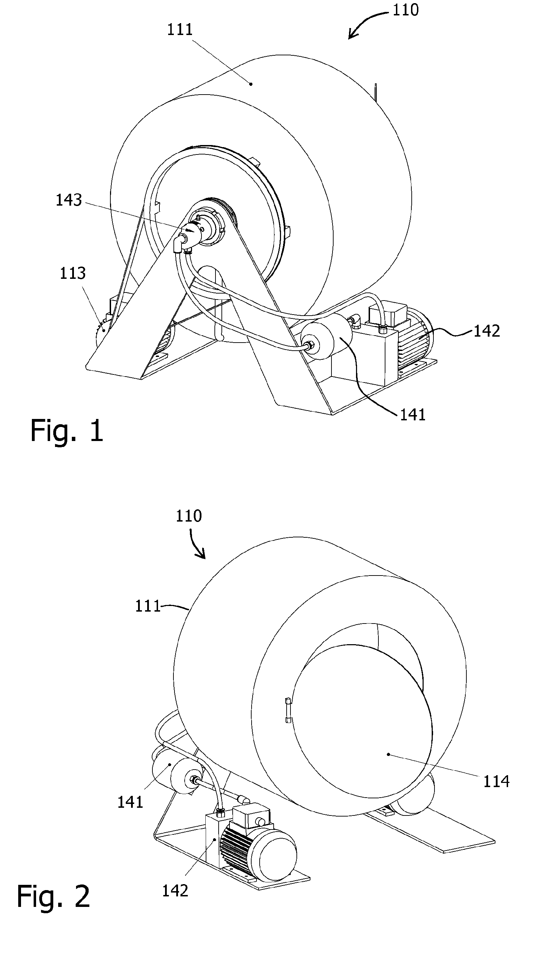

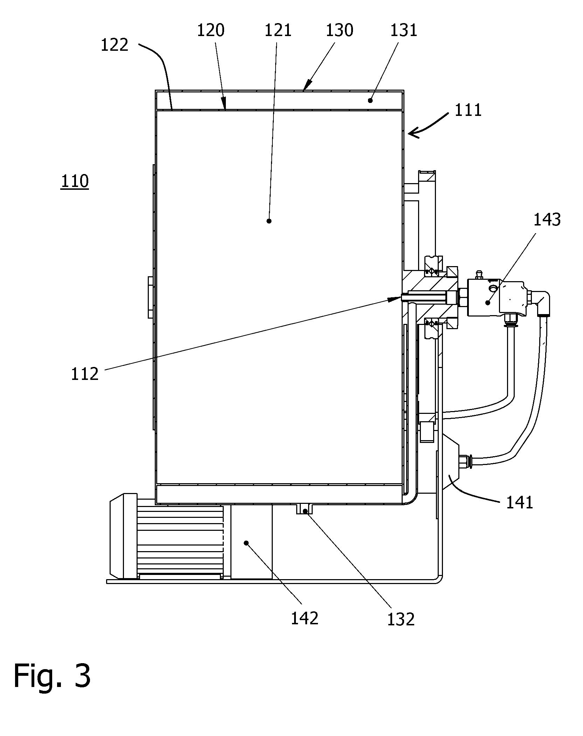

Bekannte Verfahren zum Trocken von Stoffen benötigen einen hohen Energieaufwand aufgrund der hohen Verdampfungsenergie beim Phasenübergang von Wasser von der flüssigen Phase ins Gasförmige. Dieser Nachteil wird mit der in den Figuren 1-3 gezeigten Trocknungsmaschine 110 gemäß einer ersten Ausführungsform der Erfindung vermieden.

Die Trocknungsmaschine 110 enthält eine Trommel 111 mit einem äußeren Mantel und einem inneren Mantel 122, die zwischen sich einen Zwischenraum 131 einschließen und somit eine "Kondensationskammer" 130 bilden.

Das zu trocknende Gut (z.B. Wäsche, Zellstoffe und/oder Schüttgüter) kann in den Innenraum 121 des durch den inneren Mantel 122 gebildeten "Trocknungsbehälters" 120 gegeben werden. Die Trommel 111 kann dann durch Schließen einer Klappe 114 verschlossen werden. Angetrieben durch einen Motor 113 kann sie vorzugsweise um die Trommelachse rotieren.

Im Innenraum 121 des Trocknungsbehälters 120 werden im Betrieb Temperatur und Druck so gewählt, dass sich ein Zwei-Phasengebiet aus Wasser und Wasserdampf ergibt. Je nach gewünschter Trocknungstemperatur kann dies im Unterdruck, Überdruck oder drucklos (Atmosphärendruck) passieren.

Im dargestellten Beispiel ist ein Verdichter 142 ortsfest montiert und eingangsseitig mit dem Inneren des Trocknungsbehälters 120 und ausgangsseitig mit der Kondensationskammer 130 verbunden.

Die für die Verdampfung benötigte Energie wird in Form von Wärme vorzugsweise über die Oberfläche 122 der inneren Trommel 120 zugeführt. Dazu wird durch einen Auslass 112 der inneren Trommel Dampf aus dem Trocknungsbehälter 120 abgesaugt, mit dem Verdichter 142 auf einen höheren Druck verdichtet, und in die Kondensationskammer 130 zwischen innerer und äußerer Trommel geleitet. In deren Innenraum 131 (zwischen äußerer und innerer Trommel) kondensiert dann durch den höheren Druck der Dampf bei einer höheren Temperatur als der Temperatur im Trocknungsbehälter 120. Dadurch ergibt sich ein Wärmestrom durch die innere Trommelwand 122 auf das zu trocknende Gut. Dadurch wird die Verdampfungsenergie effektiv durch die Kondensation zurückgewonnen.

Die (Gesamt-) Trommel 111 sollte nach außen zur Verringerung von Wärmeverlusten vorzugsweise thermisch isoliert werden.

Die Wärmeenergie, um das System auf Betriebstemperatur aufzuheizen, die Energie zum Ausgleich von Verlusten, sowie die Energie für den Betrieb kann vorzugsweise durch Aufheizen des Dampfes mit einem Dampferhitzer 141 oder direkt über den inneren und/oder äußeren Trommelmantel eingespeist werden. Die für den Trocknungsvorgang benötigte Wärmemenge reduziert sich um den Betrag, welcher durch die Kondensation des Dampfes frei wird.

Das entstehende Kondensat kann über einen Kondensat-Ablass 132 an der Außenseite der Kondensationskammer 130 aus dieser abgepumpt oder abgelassen werden. Das Ausbringen des Kondensats kann im laufenden Betrieb, oder bei ausreichend groß dimensioniertem Zwischenraum 131 zwischen äußerer und innerer Trommel zyklisch oder am Ende des Trocknungsvorgangs bei stehender Trommel geschehen.

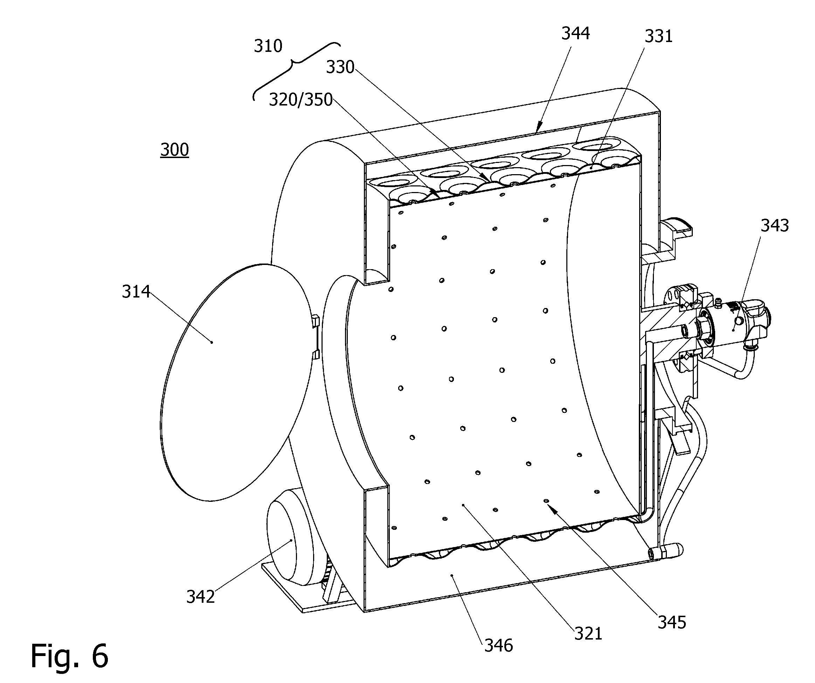

Zusammenfassend kann festgestellt werden, dass die beschriebene Trocknungsmaschine 110 bzw. das damit durchführbare Verfahren optional ein oder mehrere der folgenden Bauteile bzw. Merkmale aufweisen:
- Einen als Trommeltrockner ausgebildeten Trocknungsbehälter 120, dessen Einlass durch eine Tür oder einen Deckel 114 vorzugsweise druckdicht verschließbar ist, mit einer Öffnung 112 zum Absaugen von Wasserdampf.
- Einen äußeren Trommelmantel mit einem Zwischenraum 131 zum inneren Trommelmantel 122, und/oder mit am (inneren) Trommelmantel aufgebrachten Kanälen oder Taschen zum Durch- oder Einleiten von Dampf und/oder Kondensat.
- Das Einbringen des zu trocknenden Gutes in den Trocknungsbehälter 120.
- Das Verdampfen des Wassers aus den Stoffen.
- Ein Verdichter 142 befindet sich neben der Trommel 111 und ist über Drehdurchführungen 143 mit der Trommel verbunden.
- Ein Verdichter dreht sich mit der Trommel mit, wodurch auf Drehdurchführungen verzichtet werden kann.
- Die Trocknung erfolgt chargenweise.
- Die Trocknung erfolgt kontinuierlich.
- Verdampfte Flüssigkeit wird kondensiert in thermischem Kontakt zum Material, aus welchem die Flüssigkeit verdampft wird.
- Der Druck der verdampften Flüssigkeit vor bzw. bei deren Kondensierung wird erhöht.
- Der Trockner wird mit einer Waschtrommel kombiniert, in der vor dem Trockenvorgang der Waschvorgang stattfindet.
- Die Trommel befindet sich in einem stehenden oder sich bewegenden Gehäuse, und durch Kanäle, Löcher oder eine Perforation ist das Trommelinnere mit dem Gehäuse verbunden, wodurch als Ganzes der Verdampfungs- bzw. Trocknungsraum gebildet wird (vgl. Figur 6).
- Der Kondensationsraum befindet sich zur Übertragung der Wärme auf den Verdampfungsraum an einem äußeren Gehäuse.

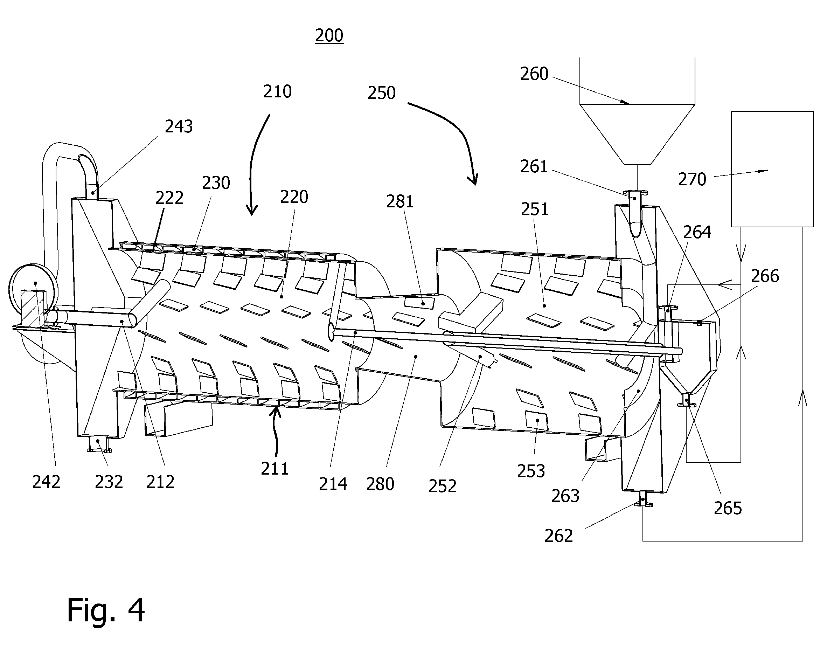

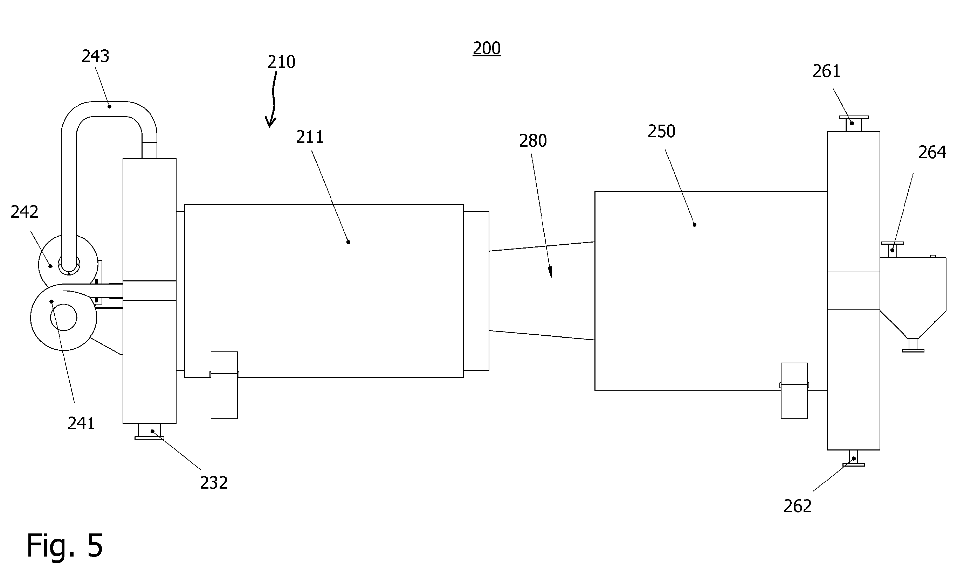

In den Figuren 4 und 5 wird eine Vorrichtung zum Regenerieren anorganisch gebundener Gießereisande gemäß einer anderen Ausführungsform der Erfindung dargestellt.

Bei der Regenerierung von chemisch gebundenen Quarzsanden geht es darum, nach der Zerkleinerung von Quarzsandknollen die Bindereste von den Körnern abzureinigen, um den Sand anschließend zur Herstellung von Gießformen wiederverwenden zu können.

Chemisch gebundene Gießereisande werden in erster Linie mechanisch oder thermisch gereinigt. Während bei der mechanischen Regenerierung die Bindereste durch Reiben oder Aufprall entfernt werden, werden bei der thermischen Regenerierung die Bindereste verbrannt. Die Verbrennung ist aber nur bei Bindern auf Basis organischer Verbindungen möglich. Bei anorganischen Bindern sind keine Bestandteile vorhanden, welche sich durch Verbrennung vom Korn ablösen lassen könnten.

Bei der mechanischen Regenerierung werden die abgelösten Bindereste durch Sichtung aus dem Schüttgut herausgeblasen. Bei der mechanischen Regenerierung kommt es in der Regel immer zu einer Kornzerstörung. Durch das Aneinanderreihen oder durch den Anprall können Quarzkörner zerbrechen, oder Teile davon herausbrechen. Dadurch entsteht Staub und die Kornfraktion wird immer feiner. Dadurch muss immer gröberer Sand hinzugemischt werden.

Die thermische Regenerierung ist mit einem hohen Energieaufwand verbunden, da der Quarzsand bis über den Flammpunkt der Bindemittel aufgeheizt werden muss. Dies macht das Verfahren häufig unwirtschaftlich.

Trommeltrockner werden verwendet zur Schüttguttrocknung. Dabei wird das Schüttgut auf der einen Seite in eine horizontal oder schräg angeordnete rotierende Trommel eingegeben. Durch Schaufeln innerhalb der Trommel sowie der Rotation wird das Material mit der Drehung nach oben gefördert und fällt dann durch das Zentrum der Trommel wieder nach unten.

Im Zentrum der Trommel wird das Schüttgut mit einem Gasbrenner oder durch anders geartete Wärmeeinbringung aufgeheizt und somit durch Verdunstung des Wassers getrocknet. Durch die Geometrie der Schaufeln und/oder die Schrägstellung der Trommel wird das Material von der Aufgabe der Trommel zum Ende gefördert. Durch die hohe Verdampfungsenthalpie beim Phasenübergang des Wassers von der flüssigen Phase ins Gasförmige benötigt diese Art der Trocknung einen hohen Energieaufwand.

Mit der in den Figuren 4 und 5 dargestellten Regenerierungsanlage 200 für anorganisch gebundene Gießereisande werden die vorstehend angesprochenen Probleme gelöst.

Anorganisch gebundene Sande sind in der Regel wasserlöslich, so dass sich die Bindemittel mit Wasser oder durch Zusatz von Reinigern einfach abwaschen lassen. Die "Deantec" Regenerierungsanlage 200 besteht in der dargestellten, beispielhaften Ausführungsform aus einer Trommel bestehend aus Waschtrommel 250, Abtropftrommel 280 oder Zentrifuge, und einer Trockentrommel 210, 220 (auch "Trommeltrockner" genannt). In dem Fall, dass eine Abtropftrommel ausreichend ist, können alle drei Trommeln zusammen mit der gleichen Drehzahl rotieren.

Der gebrochene Gießereisand wird direkt aus einem Silo 260 oder mit einer geeigneten Fördereinrichtung kontinuierlich in den Schüttguteinlauf 261 eingegeben, welcher ins Innere 251 der Waschtrommel 250 führt.

Die Reinigungsflüssigkeit wird in den Reinigungsflüssigkeitseinlauf 264 kontinuierlich eingegeben. Durch Leitungskanäle 252 wird die Waschflüssigkeit im Bereich des Sandauslaufs der Waschtrommel 250 in das Innere 251 der Trommel geleitet.

In der Waschtrommel 250 läuft der Sand durch die Rotation der Trommel 250 sowie die Anordnung der Leitschaufeln 253 durch die Trommel 250. Das Schüttgut wir dabei durch die Leitschaufeln 253 angehoben. Ab einem gewissen Drehwinkel läuft das Schüttgut-Reinigungsmittelgemisch von den Leitschaufeln 253 und fällt je nach Drehgeschwindigkeit der Trommel 250 durch die Trommelmitte wieder nach unten. Durch die schräge Anordnung der Leitschaufeln 253 fällt der Sand immer etwas weiter Richtung Waschtrommelauslauf (Sandauslauf), wodurch sich eine Förderrichtung ergibt. Die Förderrichtung könnte man ebenfalls erreichen, indem man die Trommel 250 leicht schräg stellt.

Die Waschflüssigkeit läuft im Bereich des Sandeinlaufs 261 durch ein Sieb 263 durch den Waschflüssigkeitsauslauf 262 wieder aus der Waschtrommel heraus. Die Waschflüssigkeit mit den in der Waschflüssigkeit gelösten Bindemittelresten wird dann in die Waschflüssigkeitsaufbereitungsanlage 270 gepumpt.

Im Auslassbereich 280 der Waschtrommel 250 wird das Sand-Waschflüssigkeitsgemisch abgetropft. Durch die Konizität dieses Bereiches läuft das Wasser durch die Schwerkraft Richtung Waschtrommel 250. Der Sand wird durch Leitschaufeln 281 in Richtung Trommeltrockner 210, 220 gefördert.

Alternativ könnte an dieser Stelle auch eine Zentrifuge eingebaut werden, um die Waschflüssigkeit herauszuschleudern.

Der Sand inkl. der vorhandenen Restfeuchte läuft dann in eine Trocknungsmaschine 210, den "Trommeltrockner", mit Kondensationsenergie - Rückgewinnung.

Im Trommeltrockner 210 bzw. in dessen Trockenbehälter (innere Trommel 220) wird der Sand mit einem Gasbrenner 241 oder anderen Vorrichtungen zur Wärmeeinbringung erhitzt, bis die Siedetemperatur der Waschflüssigkeit erreicht wird. Der entstehende Wasserdampf strömt über die Dampfleitung 243 aus der Trommel 220 heraus und wird mit einem Verdichter 242 auf einen höheren Druck gebracht, welcher vorzugsweise höher als der Druck des Wasserdampfes im Inneren der Trommel 220 ist. Der Wasserdampf wird dann durch die Dampfleitung 212 in einem äußeren Trommelzug 230, der "Kondensationskammer", um die innere Trommel 220 herum geleitet.

Der Dampf kondensiert dann im äußeren Trommelzug 230 und gibt die Kondensationsenergie an den inneren Trommelzug 220 ab. Die dabei freiwerdende Wärmeenergie entspricht der Energie, die beim Verdampfen des Wassers aufgenommen wurde.

Durch den bevorzugten Druckunterschied zwischen Trommelinneren (220) und Trommeläußeren (230) ist die Verdampfungstemperatur niedriger als die Kondensationstemperatur. Dadurch ergibt sich ein Wärmestrom vom Kondensat durch die innere Trommelwand 222 zum Schüttgut hin. Die Einbringung externer Wärmeenergie kann dadurch um die Wärmemenge, welche über die Trommelwand eingebracht wird, reduziert werden.

Die kondensierte Waschflüssigkeit wird durch eine zentral durch die Waschtrommel verlaufende Leitung 214 durch den Waschwasserauslauf 265 aus der Waschtrommel 250 herausgeführt und kann dann direkt in den Waschwasserzulauf 264 gepumpt werden.

Durch eine Öffnung 266 am Eingang der Waschtrommel 250 können über ein Druckbegrenzungsventil Gase, welche über den Sand in die Trommel eingebracht werden, aus dem System abgelassen werden.

Der getrocknete Sand fließt durch die Anordnung der Leitschaufeln oder durch eine Schrägstellung der Trockentrommel 220 in Verbindung mit der Rotation der Trommel durch den Sandauslauf 232 aus dem Trommeltrockner zur Weiterverarbeitung heraus.

Zusammenfassend kann festgestellt werden, dass die beschriebene Regenerierungsanlage 200 für Stoffe/Stoffgemische wie beispielsweise anorganisch gebundene Gießereisande bzw. das damit durchführbare Verfahren optional ein oder mehrere der folgenden Bauteile bzw. Merkmale aufweisen:
- Eine Waschtrommel 250, in welcher ein Stoffgemisch mit einer Waschflüssigkeit, vorzugsweise mit Wasser, gemischt werden kann.
- Einen Trommeltrockner 210, dessen Einlass mit dem Auslass der Waschtrommel 250 verbunden ist und in welchem Reste der Waschflüssigkeit verdampft werden können.
- Das Mischen eines Stoffgemisches mit einer Waschflüssigkeit wie beispielsweise Wasser, wobei das Mischen vorzugsweise in einer Waschtrommel 250 erfolgt.
- Das Ableiten von Waschflüssigkeit mit darin gelösten Bestandteilen eines Stoffgemisches.
- Das Verdampfen von Resten der Waschflüssigkeit, wobei das Verdampfen vorzugsweise in einem Trommeltrockner 210 erfolgt.
- Die Drehung der Waschtrommel 250 gemeinsam mit dem Trommeltrockner 210.
- Die Kondensation der verdampften Waschflüssigkeit in thermischem Kontakt zum Material, aus welchem Waschflüssigkeit verdampft wird.
- Die Erhöhung des Druckes der verdampften Waschflüssigkeit vor bzw. bei deren Kondensierung.

Figur 6 zeigt in einer Schnittansicht einen Waschtrockner 300, also eine Waschmaschine mit integriertem Trockner, welcher eine bauliche Abwandlung der Trocknungsmaschine 110 aus den Figuren 1-3 darstellt. Die zu der genannten Trocknungsmaschine ähnlichen Komponenten werden im Folgenden nicht mehr im Einzelnen erläutert.

Bei dem Waschtrockner 300 dient der Trocknungsbehälter (innere Trommel 320) gleichzeitig als Waschkammer 350, in der z.B. Textilien gewaschen werden können.

In Abwandlung der Trocknungsmaschine 110 der Figuren 1-3 gibt es eine Vielzahl von radial verlaufenden Verbindungen (Löcher 345), welche das Innere 321 des Trocknungsbehälters 320 durch die Kondensationskammer hindurch mit einem (hier stationären, alternativ drehbaren) Außenraum verbinden.

Bei der dargestellten Ausführungsform ist diesbezüglich die innere Trommel 320 für den Waschvorgang (wie bei einer herkömmlichen Waschmaschine) mit Löchern 345 versehen, die in Verbindung mit dem äußeren statischen Behälter 344 stehen. Die Kondensationskammer 330 ist beispielsweise zwischen den Löchern 345 der inneren Trommel in Form von Taschen oder Kanälen 331 auf dem Trommelmantel der inneren Trommel und/oder stirnseitig (nicht dargestellt) an der inneren Trommel angebracht.

Aus einem äußeren stationären Behälter 344, in welchem die innere Trommel 320 drehbar gelagert ist, kann Waschwasser zugegeben werden bzw. in seinen Innenraum 346 kann beim Schleudern das Wasser wieder aus der inneren Trommel abgelassen werden.

Nach dem Schleudern und Abpumpen des Waschwassers bildet die innere Trommel 320 zusammen mit dem Außenraum 346 des äußeren statischen Gehäuses 344 den Druckbereich für die Verdampfung. In den aufgebrachten Taschen/Kanälen 331 findet bei höherem Druck die Kondensation statt.

Ein Vorteil dieser Ausführungsform ist, dass man für die Verbindung des dem inneren Bereiches des Trocknungsbehälters 320 zum Verdichter 342 keinen Drehverbinder benötigt, da der Entzug verdampften Waschwassers am statischen äußeren Behälter 344 erfolgen kann.

Die Herstellung der inneren Trommel 320 kann beispielsweise dadurch erfolgen, dass die äußere rotierende Trommel 330 und die innere Trommel 320 als abgewickelte, flache Bleche übereinander gelegt und in regelmäßigen Abständen im Punktschweißverfahren verbunden werden. Durch die Punktschweißungen können dann die Löcher 345 gebohrt werden. In einem zweiten Schritt können die Bleche zur Trommel gewalzt und eine Längsnaht geschweißt werden. Im dritten Schritt kann der Zwischenraum zwischen äußerem und inneren Blech aufgepumpt werden (Hydroforming), wodurch sich der Kondensationsraum 331 bildet.

Mit Hilfe der Figuren 1-6 wurden spezielle Ausführungsbeispiele beschrieben für ein Verfahren und eine Trocknungsmaschine zum Trocknen von Stoffen, beispielsweise von Gießereisanden, Wäsche, Zellstoffen und/oder Schüttgütern. Dabei werden die zu trocknenden Stoffe in einen Trocknungsbehälter gegeben, in dem Flüssigkeit verdampft wird. Der entstehende Dampf wird in eine Kondensationskammer geleitet und dort in thermischem Kontakt zum Material aus dem Trocknungsbehälter kondensiert. Auf diese Weise kann die Kondensationswärme für einen erneuten Verdampfungsprozess rückgewonnen werden. Die Trocknungsmaschine kann insbesondere in einer Regenerierungsanlage für anorganisch gebundene Gießereisande eingesetzt werden.

Es wird darauf hingewiesen, dass alle in der Anmeldung beschriebenen technischen Merkmale eine eigenständige erfinderische Bedeutung besitzen, auch wenn sie vorliegend in Verbindung mit anderen Merkmalen erläutert wurden.

## Patentansprüche

1. Trocknungsmaschine (110, 210, 310) zum Trocknen von Stoffen, beispielsweise von Gießereisanden, Wäsche, Zellstoffen und/oder Schüttgütern, enthaltend:
- einen Trocknungsbehälter (120, 220, 320) zur Aufnahme der Stoffe;
- eine mit dem Trocknungsbehälter verbundene Kondensationskammer (130, 230, 330), in der Dampf aus dem Trocknungsbehälter in thermischem Kontakt zum Material des Trocknungsbehälters kondensiert werden kann, wobei der Trocknungsbehälter einen drehbar gelagerten Trommeltrockner (120, 220, 320) enthält,
**dadurch gekennzeichnet, dass** die Kondensationskammer fest mit dem Trommeltrockner verbunden ist.

2. Verfahren zum Trocknen von Stoffen, beispielsweise von Gießereisanden, Wäsche, Zellstoffen und/oder Schüttgütern, in einer Trocknungsmaschine (110, 210, 310) nach Anspruch 1, enthaltend die Schritte:
- Verdampfen von Flüssigkeit aus den Stoffen im Trocknungsbehälter (120, 220, 320);
- Kondensieren der verdampften Flüssigkeit in der Kondensationskammer (130, 230, 330) in thermischem Kontakt zum Material, aus dem die Flüssigkeit verdampft wurde.

3. Trocknungsmaschine (110, 210, 310) oder Verfahren nach mindestens einem der vorangehenden Ansprüche,
**dadurch gekennzeichnet, dass** der Trocknungsbehälter (120, 220, 320) baulich von der Kondensationskammer (130, 230, 330) getrennt ist, vorzugsweise durch eine gemeinsame Wand (122, 222).

4. Trocknungsmaschine (110, 210, 310) oder Verfahren nach mindestens einem der vorangehenden Ansprüche,
**dadurch gekennzeichnet, dass** die Kondensationskammer (130, 230, 330) den Trocknungsbehälter (120, 220, 320) umgibt oder umgekehrt.

5. Trocknungsmaschine (110, 210, 310) oder Verfahren nach mindestens einem der vorangehenden Ansprüche,
**dadurch gekennzeichnet, dass** ein Verdichter (142, 242, 342) zur Erhöhung des Druckes in der Kondensationskammer (130, 230, 330) und/oder zur Verringerung des Druckes im Trocknungsbehälter (120, 220, 320) vorhanden ist.

6. Waschanlage (200, 300), insbesondere für Stoffe wie beispielsweise Gießereisande, Wäsche, Zellstoffe und/oder Schüttgüter, enthaltend:
- eine Waschkammer (250, 350), in welcher die Stoffe mit einer Waschflüssigkeit gemischt werden können;
- eine Trocknungsmaschine (210, 310) nach mindestens einem der Ansprüche 1 bis 5, in welcher Reste der Waschflüssigkeit von Stoffen aus der Waschkammer verdampft werden können.

7. Trocknungsmaschine (110, 210, 310), Waschanlage (200, 300), oder Verfahren nach mindestens einem der vorangehenden Ansprüche, **dadurch gekennzeichnet, dass** die Stoffe chargenweise oder kontinuierlich zugeführt werden.

## Claims

1. Drying machine (110, 210, 310) for drying materials, for example foundry sands, laundry, cellulose and/or bulk materials, containing:
- a drying container (120, 220, 320) for receiving the materials;
- a condensation chamber (130, 230, 330) which is connected to the drying container, in which steam from the drying container can be condensed in thermal contact with the material in the drying container, wherein the drying container contains a rotatably mounted drum dryer (120, 220, 320),
**characterized in that** the condensation chamber is fixedly connected to the drum dryer.

2. Procedure for drying materials, for example foundry sands, laundry, cellulose and/or bulk materials, in a drying machine (110, 210, 310) according to claim 1, containing the steps:
- vaporisation of liquid out of the materials in the drying container (120, 220, 320);
- condensation of the evaporated liquid in the condensation chamber (130, 230, 330) in thermal contact with the material, out of which the liquid was evaporated.

3. Drying machine (110, 210, 310) or procedure according to at least one of the preceding claims,
**characterized in that** the drying container (120, 220, 320) is structurally separated from the condensation chamber (130, 230, 330), preferably by a common wall (122, 222).

4. Drying machine (110, 210, 310) or procedure according to at least one of the preceding claims,
**characterized in that** the condensation chamber (130, 230, 330) surrounds the drying container (120, 220, 320) or vice versa.

5. Drying machine (110, 210, 310) or procedure according to at least one of the preceding claims,
**characterized in that** there is a compressor (142, 242, 342) in order to increase the pressure in the condensation chamber (130, 230, 330) and/or to reduce the pressure in the drying container (120, 220, 320).

6. Washing system (200, 300), in particular for materials as for example foundry sands, laundry, cellulose and/or bulk materials, containing:
- a washing chamber (250, 350), in which the materials can be mixed with a washing liquid;
- a drying machine (210, 310) according to at least one of the claims 1 to 5, in which rests of the washing liquid can be evaporated from materials out of the washing chamber.

7. Drying machine (110, 210, 310), washing system (200, 300), or procedure according to at least one of the preceding claims,
**characterized in that** the materials are supplied batchwise or continuously.

## Revendications

1. Machine à sécher (110, 210, 310) pour le séchage de matières, par exemple de sable de fonderie, de la linge, de la cellulose et/ou de produits en vrac, contenant:
- un récipient de séchage (120, 220, 320) pour recevoir des matières;
- une chambre de condensation (130, 230, 330), reliée avec le récipient de séchage, dans laquelle la vapeur du récipient de séchage peut être condensée en contact thermique avec la matière du récipient de séchage, le récipient de séchage contenant un sécheur à tambour (120, 220, 320) monté à rotation,
**caractérisé en ce que** la chambre de condensation est reliée de manière solidaire avec le sécheur à tambour.

2. Procédé pour le séchage de matières, par exemple de sable de fonderie, de la linge, de la cellulose et/ou de produits en vrac, dans une machine à sécher (110, 210, 310) selon la revendication 1, contenant les étapes:
- vaporisation de liquide provenant des matières dans le récipient de séchage (120, 220, 320);
- condensation du liquide vaporisé dans la chambre de condensation (130, 230, 330) en contact thermique avec la matière de laquelle le liquide était vaporisé.

3. Machine à sécher (110, 210, 310) ou procédé selon au moins l'une quelconque des revendications précédentes,
**caractérisé en ce que** le récipient de séchage (120, 220, 320) est séparé de la chambre de condensation (130, 230, 330), de préférence par une paroi commune (122, 222).

4. Machine à sécher (110, 210, 310) ou procédé selon au moins l'une quelconque des revendications précédentes,
**caractérisé en ce que** la chambre de condensation (130, 230, 330) entourne le récipient de séchage (120, 220, 320) ou inversement.

5. Machine à sécher (110, 210, 310) ou procédé selon au moins l'une quelconque des revendications précédentes,
**caractérisé en ce qu'** il y a un compresseur (142, 242, 342) pour augmenter la pression dans la chambre de condensation (130, 230, 330) et/ou pour réduire la pression dans le récipient de séchage (120, 220, 320).

6. Installation à lavage (200, 300), particulièrement pour des matières comme par exemple de la sable de fonderie, de la linge, de la cellulose et/ou de produits en vrac, contenant:
- une chambre de lavage (250, 350), dans laquelle les matières peuvent être mélangées avec un liquide de lavage;
- une machine à sécher (210, 310) selon au moins une des revendications 1 à 5, dans laquelle des restes du liquide de lavage peuvent être vaporisés des matières de la chambre de lavage.

7. Machine à sécher (110, 210, 310), installation à lavage (200, 300), ou procédé selon au moins l'une quelconque des revendications précédentes,
**caractérisé en ce que** les matières sont fournies par lots ou en continu.
